## Europäisches Patentamt
## European Patent Office
## Office européen des brevets

(19)

(11) Numéro de publication: **0 261 015**
**B1**

(12) ## FASCICULE DE BREVET EUROPEEN

(45) Date de publication du fascicule du brevet:
16.08.90

(51) Int. Cl.⁵: **G05D 1/04, B64C 13/16**

(21) Numéro de dépôt: **87401976.3**

(22) Date de dépôt: **03.09.87**

(54) Système de commande de vol électrique avec protection en incidence pour aéronef.

(30) Priorité: **15.09.86 FR 8612855**

(43) Date de publication de la demande:
**23.03.88 Bulletin 88/12**

(45) Mention de la délivrance du brevet:
**16.08.90 Bulletin 90/33**

(84) Etats contractants désignés:
**DE ES GB IT NL SE**

(56) Documents cités:
**EP-A- 0 152 714**
**WO-A-84/01345**
**FR-A- 2 358 055**
**FR-A- 2 418 152**
**GB-A- 2 073 114**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Fabre, Pierre, 16-18 rue du Foyer Toulousain, F-31300 Toulouse(FR)**

(74) Mandataire: **Bonnetat, Christian et al, CABINET BONNETAT 23, Rue de Léningrad, F-75008 Paris(FR)**

## Description

La présente invention concerne les aéronefs, notamment les avions de transport modernes, équipés d'un système de commandes de vol électriques.

On sait que, dans de tels aéronefs, les ordres de pilotage donnés par le ou les pilotes au moyen d'organes de commande, tels que par exemple des mini-manches à balai, sont transmis à des calculateurs par l'intermédiaire de capteurs de position, associés auxdits organes de commande et engendrant des signaux électriques représentatifs de la position desdits organes de commande actionnés par les pilotes. Ainsi, en commande d'incidence, la position d'un tel organe de commande est transformée par lesdits calculateurs en une valeur d'incidence et le système commande le mouvement de l'aéronef par l'intermédiaire des surfaces aérodynamiques de commande de profondeur, de façon que l'incidence réelle de l'aéronef soit égale à la valeur commandée par le pilote, par l'actionnement dudit organe de commande.

L'objet de la présente invention est notamment de protéger un tel aéronef contre les décrochages ou autres dangers, en faisant en sorte que l'incidence maximale que peut commander le pilote reste inférieure à une valeur d'incidence dangereuse pour l'aéronef dans la configuration qu'il présente au moment de l'action du pilote. Le système prévu par l'invention est opérationnel quels que soient le point de vol de l'aéronef (palier, virage, pente) et la position de la manette des gaz ; il met à profit le fait que, en cas de danger notamment, l'application (manuelle ou automatique) de la poussée maximale sur le ou les moteurs disponibles, conjuguée à la possibilité de commander une incidence élevée sans risque de décrochage, est un moyen efficace de lutter contre les gradients de vent, dans les phases de vol critiques que sont le décollage et l'atterrissage.

A cette fin, selon l'invention, le système électrique pour la commande d'une surface aérodynamique de profondeur d'aéronef, du type comportant :
- un organe de commande actionné par le pilote de l'aéronef et associé à un premier capteur de position délivrant un signal électrique représentatif de la position dudit organe de commande donnant pour consigne l'incidence désirée (Id) pour l'aéronef ;
- des moyens moteurs pour la commande de l'incidence de ladite surface aérodynamique de profondeur ;
- un second capteur associé à l'aéronef et délivrant un signal électrique représentatif de l'incidence réelle actuelle (I) de cet aéronef ; et
- des moyens de calcul montés entre ledit premier capteur de position et ledit moteur, recevant lesdits signaux délivrés par lesdits premier et second capteurs et commandant ledit moteur pour communiquer à ladite surface aérodynamique un mouvement tel que l'aéronef atteigne une incidence suivant une loi de pilotage de profondeur programmée, est remarquable en ce qu'il comporte :
- un dispositif de protection d'incidence susceptible d'asservir l'incidence dudit aéronef dans une plage de valeur limitée supérieurement par une valeur limite (IMR), au-delà de laquelle le vol dudit aéronef pourrait devenir dangereux ;
- des moyens de commutation commandés permettant de brancher entre ledit premier capteur de position et lesdits moyens moteurs, soit lesdits moyens de calcul, soit ledit dispositif de protection ; et
- des moyens logiques de commande desdits moyens de commutation tels que :
d'autre part, à un instant donné, ledit dispositif de protection est en circuit entre ledit premier capteur de position et lesdits moyens moteurs, uniquement lorsque l'incidence réelle (I) de l'aéronef est, audit instant ou à l'instant immédiatement antérieur, supérieur à une valeur de seuil (Ip) inférieure à ladite valeur limite (IMR) et lorsque, simultanément, la position dudit organe de commande se trouve dans le domaine des incidences à cabrer ; et d'autre parts, lesdits moyens de commutation prennent leur position pour laquelle lesdits moyens de calcul sont en circuit entre ledit premier capteur de position et lesdits moyens moteurs, dès que la position dudit organe de commande se trouve dans le domaine des incidences à piquer.

Ainsi, le dispositif de protection prévu par la présente invention n'est pas continuellement actif. Au contraire, il n'est actif que lorsque l'incidence de l'aéronef atteint une valeur de seuil Ip, choisie volontairement en fonction de chaque cas particulier. Cette valeur de seuil Ip ne doit pas être trop élevée afin d'interdire de dépasser l'incidence de décrochage au cours de manoeuvres brutales, mais elle ne doit pas être trop basse pour ne pas gêner le pilotage normal par des déclenchements intempestifs. Le retour au pilotage normal se fait par une condition logique simple, traduisant une demande à piquer du pilote.

Bien entendu, la logique de passage du pilotage avec le dispositif de protection d'incidence au pilotage normal assure non seulement le changement effectif de loi de pilotage, mais encore la continuité des ordres sur les surfaces aérodynamiques de profondeur.

On remarquera que, lorsque le dispositif de protection d'incidence est en circuit, la protection assurée est insurpassable : l'autorité en incidence que possède le pilote est alors limitée de telle sorte que l'aéronef ne peut jamais atteindre une incidence dangereuse, tout en conservant une maniabilité suffisante.

De plus, le système selon l'invention est opérationnel indépendamment de la poussée disponible des réacteurs : il peut donc être avantageusement couplé à un système de remise des gaz automatique, qui sera commandé à partir d'une valeur de consigne d'incidence. Une telle valeur de consigne d'incidence sera comprise dans la plage des valeurs d'incidence dans laquelle fonctionne ledit dispositif de protection.

On comprendra aisément que le système selon l'invention permet de placer l'aéronef, en régime permanent, sur une trajectoire stable.

Avantageusement, lesdits moyens logiques de commande comportent un premier comparateur susceptible de comparer le signal électrique représentatif de l'incidence réelle actuelle (I) de l'aéronef et un signal électrique représentatif de ladite valeur de seuil (Ip), un second comparateur susceptible de comparer le signal électrique (Id) représentatif de la position dudit organe de commande et un signal électrique (IN) représentatif de la frontière entre les domaines des incidences à cabrer et à piquer, ainsi qu'un dispositif logique recevant les signaux de sortie des deux comparateurs.

Un tel dispositif logique peut être un circuit séquentiel binaire comportant une entrée de commande, une entrée de remise à zéro prioritaire et une sortie unique, circuit dans lequel le signal de sortie n'est un 1 logique que lorsque le signal sur l'entrée de commande est un 1 et que simultanément le signal sur l'entrée de remise à zéro est 0 ou que, à partir de cet état, le signal sur l'entrée de commande passe de 1 à 0.

Avantageusement, ladite plage de valeurs auxquelles ledit dispositif de protection asservit l'incidence de l'aéronef, a pour limite inférieure ladite valeur de seuil (Ip).

Ainsi, lorsque le dispositif de protection d'incidence est en circuit, le pilote commande une incidence qui est telle que :
- manche à balai relâché, au point mort, sa valeur est égale à (Ip), qui détermine la mise en circuit dudit dispositif de protection ;
- manche à balai en appui contre la butée à cabrer, sa valeur est égale à ladite valeur limite supérieure (IMR), inférieure à toute incidence dangereuse, telle que l'incidence de décrochage, mais supérieure à (Ip).

Aussi, selon la présente invention, il est dangereux que ledit dispositif de protection d'incidence comporte un sommateur pour additionner ledit signal représentatif de ladite valeur de seuil (Ip) au signal représentatif de la position dudit organe de commande (Id) et des moyens pour asservir ledit signal électrique représentatif de l'incidence réelle actuelle (I) à la somme de signaux ainsi obtenue.

De préférence, avant asservissement dudit signal électrique représentatif de l'incidence réelle actuelle (I) à ladite somme de signaux, ledit signal est corrigé pour prendre en compte des informations gyrométriques et anémométriques, telles que par exemple la dérivée par rapport au temps de l'assiette longitudinale de l'aéronef ou une dérivée de vitesse par rapport au temps. Ainsi, le signal asservi contient des informations caractéristiques du mouvement à long terme de l'aéronef : lors d'un changement de consigne de la part du pilote, le système selon l'invention peut donc engendrer un régime transitoire qui entraîne un régime permanent, pour lequel non seulement la valeur réelle actuelle est asservie à la consigne, mais encore la vitesse et l'assiette longitudinale sont constantes. Le système prouve donc un degré de sécurité important, en empêchant l'aéronef de décrocher et en le plaçant sur une trajectoire constante.

Les figures du dessin annexé feront bien comprendre comment l'invention peut être réalisée. Sur ces figures, des références identiques désignent des éléments semblables.

La figure 1 est un diagramme donnant la portance d'un aéronef en fonction de l'incidence des gouvernes de profondeur dudit aéronef.

La figure 2 donne le schéma synoptique du système conforme à la présente invention.

La figure 3 illustre schématiquement une partie des moyens de commande des commutateurs du système de la figure 2.

La figure 4 est le schéma synoptique du dispositif de protection d'incidence prévu dans le système de la figure 2.

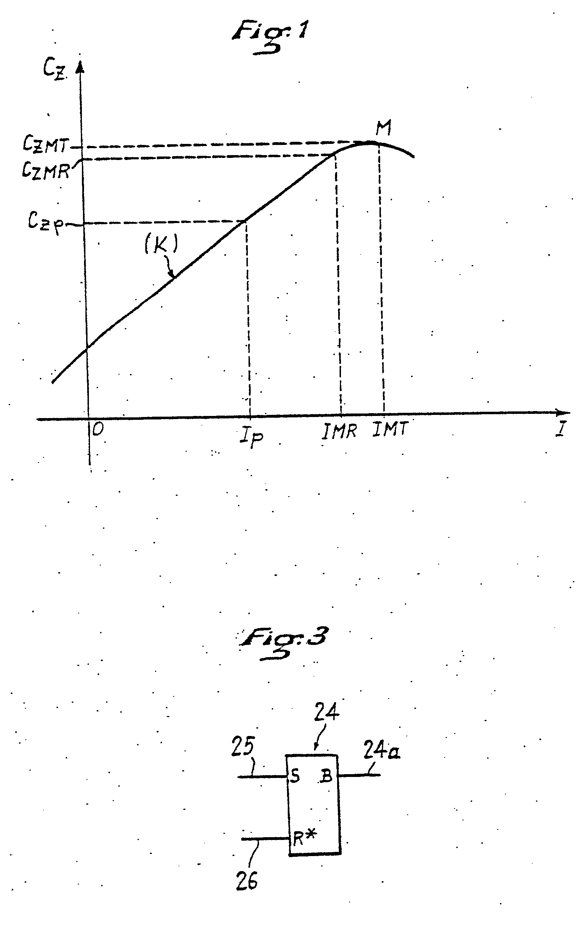

On sait que si, pour un aéronef déterminé, on représente la portance (ou coefficient de portance CZ) en fonction de l'incidence I dudit aéronef, on obtient une courbe dont l'allure est celle de la courbe (K) de la figure 1. La portance croît de façon pratiquement proportionnelle à l'incidence, mais, pour des valeurs d'incidence élevées, passe par un maximum théorique CZMT (en M) correspondant à une valeur d'incidence maximale théorique IMT. Bien entendu, puisque pour des incidences I supérieures à IMT, le coefficient de portance CZ décroît, il est nécessaire de limiter l'incidence I à des valeurs inférieures à IMT. De plus, puisque par ailleurs, pour un même aéronef, la courbe (K) varie en fonction de nombreux paramètres (tels que le nombre de Mach, la vitesse, la configuration de l'aéronef, la mise en service des aérofreins, etc...) , il est prudent de limiter l'incidence maximale réelle susceptible d'être donnée audit aéronef à une valeur IMR, inférieur à IMT, afin de ne pas risquer d'entrer dans une zone de portance décroissante, ce qui pourrait être dangereux pour l'aéronef, car entraînant le décrochage ou bien encore des battements (buffeting) ou des vibrations de tangage. Ainsi, il est avantageux que la portance maximale réelle soit limitée supérieurement à la valeur CZMR.

Selon l'invention, on prévoit un système automatique permettant de limiter l'incidence réelle de l'aéronef à la valeur IMR, dès que cette incidence dépasse en croissant une valeur de seuil, ou valeur de protection, Ip, inférieure à IMR et correspondant à une portance CZp.

Dans les développements ci-après, les signaux électriques représentatifs des différentes incidences sont désignés par les mêmes références (I, Ip, Id, etc...) que celles-ci.

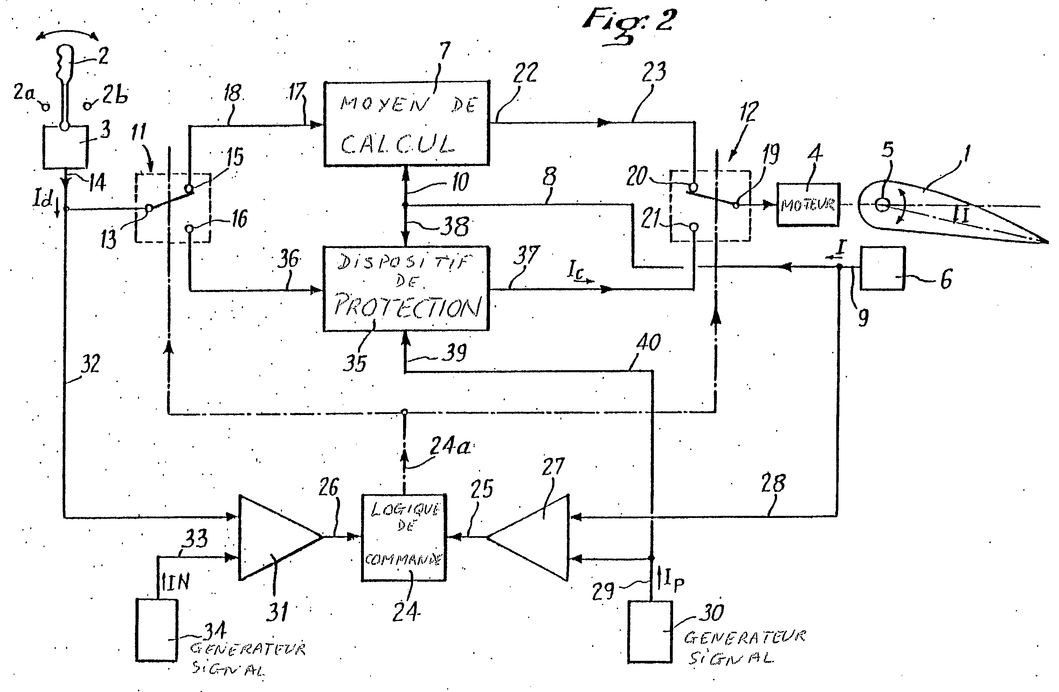

Le système selon l'invention, montré schématiquement sur la figure 2, est destiné à commander une surface aérodynamique 1 contrôlant en profondeur le pilotage d'un aéronef (non représenté). Ce système comporte, entre autres :
- un organe de commande 2, tel qu'un manche à balai, pouvant être actionné entre une butée à piquer 2a et une butée à cabrer 2b par le pilote ou le copilote de l'aéronef et a ssocié à un premier capteur de position 3, par exemple de type potentiométrique, délivrant un signal électrique représentatif de la position dudit organe de commande 2, c'est-à-dire d'une incidence Id, désirée par ledit pilote pour l'aéronef 1 ;
- un moteur ou vérin 4 destiné à la commande de ladite surface aérodynamique 1, afin de la faire pivoter autour de son axe d'articulation sur ledit aéronef, pour faire varier l'incidence réelle 1 dudit aéronef 1 ;

- un second capteur de position 6, associé audit aéronef 1 et délivrant un signal électrique représentatif de l'incidence réelle I de celui-ci ; et
- des moyens de calcul 7, devant recevoir les signaux desdits premier et second capteurs de position 3 et 6 et destinés à commander le moteur ou le vérin 4 pour communiquer à ladite surface aérodynamique 1 un mouvement tel que l'aéronef atteigne une incidence suivant une loi de pilotage de profondeur programmée désirée pour ledit aéronef et par exemple emmagasinée dans lesdits moyens de calcul 7.

Une liaison directe 8 relie la sortie 9 du second capteur de position 6 à l'entrée correspondante 10 des moyens de calcul 7. En revanche des commutateurs 11 et 12 sont respectivement interposés entre le premier capteur de position 3 et les moyens de calcul 7, d'une part, et entre les moyens de calcul 7 et le moteur ou vérin 4, d'autre part. Il va de soi que, quoique représentés sous la forme de commutateurs à organe mobile pour une bonne compréhension, lesdits commutateurs 11 et 12 peuvent être de type statique.

Le commutateur 11 comporte une entrée commune 13, reliée à la sortie 14 du premier capteur de position 3, et deux sorties 15 et 16 pouvant alternativement être reliées à ladite entrée commune 13. La sortie 15 du commutateur 11 est reliée à l'entrée correspondante 17 des moyens de calcul 7 par une liaison 18.

Le commutateur 12 comporte une sortie commune 19, reliée au moteur ou vérin 4, et deux entrées 20 et 21 pouvant être alternativement reliées à ladite sortie commune 19. L'entrée 20 du commutateur 12 est reliée à la sortie correspondante 22 des moyens de calcul 7 par une liaison 23.

La commande des commutateurs 11 et 12 est couplée et est réalisée au moyen d'un dispositif logique de commande, à deux entrées 25 et 26, qui impose :
- soit une première position (représentée sur la figure 2), pour laquelle le commutateur 11 établit la liaison entre son entrée 13 et sa sortie 15, tandis que le commutateur 12 réalise la liaison entre son entrée 20 et sa sortie 19 ;
- soit une seconde position, pour laquelle le commutateur 11 établit la liaison entre son entrée 13 et sa sortie 16, tandis que le commutateur 12 réalise la liaison entre son entrée 21 et sa sortie 19.

L'entrée 25 du dispositif logique de commande 24 est reliée à la sortie d'un comparateur 27, dont l'une des entrées est reliée à la sortie 9 du second capteur de position 6 par une liaison 28 et dont l'autre entrée est reliée à la sortie 29 d'un générateur 30.

Le générateur 30, par exemple du type potentiométrique, émet à sa sortie 29 un signal électrique représentatif du seuil d'incidence Ip, mentionné ci-dessus et à partir duquel fonctionne la protection automatique en incidence, conforme à l'invention. Ainsi, par son entrée 25, le dispositif logique de commande 24 connaît le résultat de la comparaison entre l'incidence réelle actuelle I de l'aéronef 1 et ledit seuil d'incidence Ip.

L'entrée 26 du dispositif logique de commande 24 est reliée à la sortie d'un comparateur 31, dont l'une des entrées est reliée à la sortie 14 du premier capteur de position 3 par une liaison 32 et dont l'autre entrée est reliée à la sortie 33 d'un générateur 34.

Le générateur 34, par exemple une simple liaison à la masse, émet à sa sortie 33 un signal électrique représentatif de la valeur neutre IN, par exemple la valeur nulle, de l'incidence désirée Id séparant les deux domaines d'incidence dans lesquels ledit aéronef est respectivement commandé à piquer (Id-Ip< 0) et à cabrer (Id-Ip > 0). Ainsi, par son entrée 26, le dispositif logique de commande 24 connaît le résultat de la comparaison entre l'incidence désirée actuelle Id demandée par le manche 2 et ladite valeur neutre IN.

La sortie 24a du dispositif logique de commande 24 fait prendre aux commutateurs 11 et 12 :

1) systématiquement leur première position (liaison 13-15 et liaison 19-20), notamment lorsque le résultat de la comparaison de Id et de IN par le comparateur 31 indique que la valeur actuelle désirée de Id correspond à une commande en piqué, et plus généralement dans tous les cas non prévus sous 2) ci-après ;

2) exceptionnellement, leur seconde position (liaison 13-16 et liaison 19-21), lorsque le résultat de la comparaison de I et de Ip par le comparateur 30 indique que la valeur actuelle réelle de l'incidence de l'aéronef dépasse la valeur de seuil Ip, et que simultanément le résultat de la comparaison de Id et de IN par le comparateur 31 indique que l'on se trouve dans le domaine des incidences à cabrer. De plus, lesdits commutateurs 11 et 12 restent dans cette seconde position, lorsque, à partir de la situation décrite ci-dessus, le résultat de la comparaison entre I et Ip s'inverse, alors que le résultat entre Id et IN reste le même.

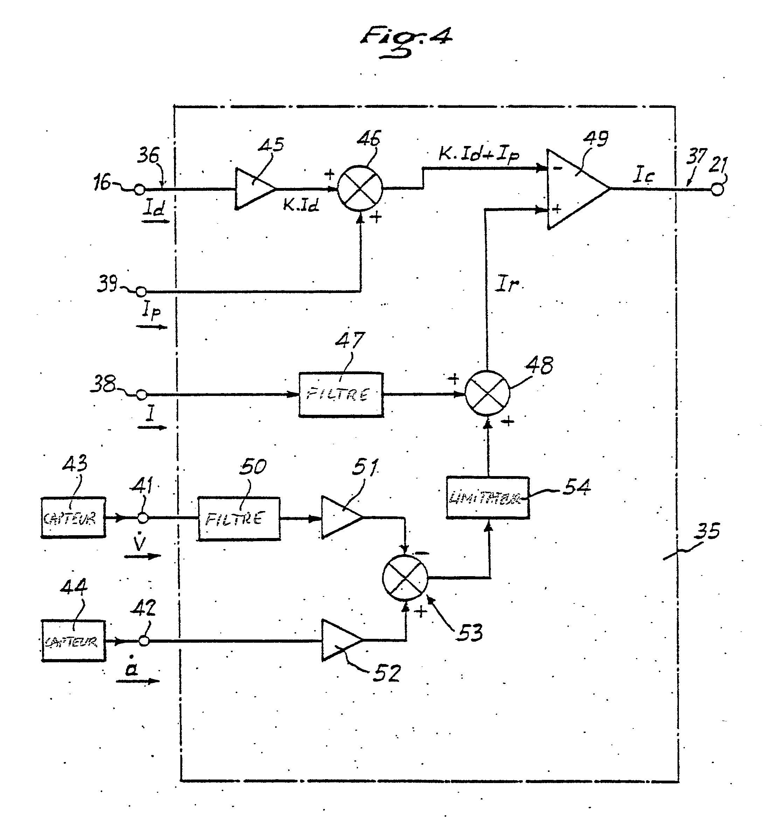

Par ailleurs, entre le commutateur 11 et le commutateur 12, est prévu un dispositif de protection 35 conforme à l'invention, destiné à contrôler la plage de variation de l'incidence I entre les valeurs Ip et IMR. Un exemple de réalisation du dispositif de protection 35 est décrit en regard de la figure 4.

L'entrée 36 et la sortie 37 du dispositif de protection 35 sont respectivement reliées à la sortie 16 du commutateur 11 et à l'entrée 21 du commutateur 12. De plus, ledit dispositif de protection 35 comporte une seconde entrée 38 reliée à la sortie 9 du second capteur de position 6 par la liaison 8. Ainsi, le dispositif de protection 35 connaît la valeur I. Le dispositif de protection 35 peut également comporter une troisième entrée 39, reliée à la sortie 29 du générateur 30 par une liaison 40, dans le cas où il a à connaître la valeur Ip comme cela sera mentionné ci-après en regard de la figure 4.

De façon simple, ledit dispositif logique de commande 24 peut être réalisé par un circuit séquentiel du type SRB à remise à zéro prioritaire, dont l'entrée de commande S (set) est l'entrée 25 et dont l'entrée de remise à zéro R (reset) est l'entrée 26. Un tel circuit séquentiel est illustré par la figure 3.

Ainsi, si l'on associe le niveau logique 1 à chacun des évènements suivants :
- I supérieur à Ip,
- Id supérieur à IN, et

- les commutateurs 11 et 12 sont dans leur seconde position pour laquelle le dispositif de protection 35 est branché entre le premier capteur de position 3 et le moteur ou vérin 4, et si l'on associe le niveau logique 0 à chacun des évènements suivants :

- I inférieur à Ip,
- Id inférieur à IN et
- les commutateurs 11 et 12 sont dans leur première position pour laquelle les moyens de calcul 7 sont branchés entre le premier capteur de position 3 et le moteur ou vérin 4, on voit que ledit dispositif de protection 35 n'est en service que :

a) lorsque I est supérieur à Ip et que simultanément Id est supérieur à IN ;
b) ou bien lorsque, I étant inférieur à Ip et Id étant supérieur à IN, l'état antérieur était celui décrit sous a).

Ainsi, en d'autres termes, le dispositif de protection 35 n'est mis en service que lorsque l'incidence de l'aéronef dépasse le seuil d'incidence de protection et que l'on se trouve dans la zone d'incidence à cabrer, et ce dispositif 35 reste dans cet état lorsque, l'incidence, quoique restant dans la zone des incidences à cabrer, reprend une valeur inférieure au seuil de protection après avoir dépassé celui-ci.

Dans tous les autres cas, le dispositif de protection 35 est hors service et ce sont les moyens de calcul 7 qui imposent la loi de pilotage en profondeur.

Le passage des commutateurs 11 et 12 de leur seconde position à leur première position se fait automatiquement, dès que Id devient inférieur à IN, c'est-à-dire dès que le pilote commande à piquer.

Dans le mode de réalisation du dispositif de protection en incidence 35 montré par la figure 4, on a prévu l'exploitation d'informations gyrométriques et anémométriques pour réaliser l'asservissement en incidence. Ainsi, ce mode de réalisation comporte, par rapport au schéma de la figure 2, deux entrées supplémentaires 41 et 42, respectivement reliées à la sortie de capteurs 43 et 44. Par exemple, le capteur 43 délivre une information V homogène à la dérivée par rapport au temps de la vitesse horizontale de l'aéronef, une telle information pouvant être la dérivée de la vitesse de vol, de la vitesse de l'air, de la vitesse conventionnelle, ou bien une information de facteur de charge longitudinal, ou bien encore un mélange de ces informations. Quant au capteur 44, il délivre une information a homogène à la dérivée par rapport au temps de l'assiette longitudinale de l'aéronef.

Par suite, les informations fournies au dispositif de protection 35 sont :

- l'incidence Id désirée, demandée par le pilote par actionnement du manche 2, engendrée par le premier capteur de position 3 et disponible à l'entrée 36 (borne 16) ;
- le seuil Ip d'incidence de déclenchement de protection, provenant du générateur 30 et disponible à l'entrée 39 ;
- l'incidence réelle actuelle I de l'aéronef, mesurée par le second capteur de position 6 et disponible à l'entrée 38 ;
- l'information de dérivée de vitesse V, fournie par le capteur 43 et disponible à l'entrée 41 ; et
- l'information de dérivée d'assiette longitudinale a, fournie par le capteur 44 et disponible à l'entrée 42.

Le principe général du mode de réalisation de la figure 4 est le suivant :

Le signal d'incidence Id est appliqué à un amplificateur 45, dont le gain K est tel que, lorsque le pilote a déplacé le manche 2 jusqu'à venir en appui contre la butée à cabrer 2b, la valeur maximale K.IdM du signal K.Id, compte tenu des traitements ultérieurs dudit signal K.Id dans le dispositif 35, est limitée pour donner à l'incidence I de l'aéronef la valeur maximale IMR, sans possibilité de la dépasser. Ainsi, en fonction de l'action du pilote sur le manche 2 dans le domaine des incidences à cabrer, le signal K.Id à la sortie de l'amplificateur 45 varie entre 0 et K.IdM.

En aval de l'amplificateur 45 est disposé un sommateur 46 permettant de faire la somme du signal K.Id et du signal Ip, présent à l'entrée 39. Le signal K.Id + Ip, en fonction de l'action du pilote sur le manche 2 varie donc de Ip à K.IdM + Ip.

Par ailleurs, le signal d'incidence réelle actuelle I présent à l'entrée 38, après passage dans un filtre passe-bas 47 afin d'éliminer l'effet des turbulences, est adressé à un sommateur 48 pour pouvoir prendre en compte, comme cela sera expliqué ci-après, les paramètres V et a. A la sortie du sommateur 48, le signal I est donc mélangé à des informations caractéristiques du mouvement à long terme de l'aéronef et ce signal mélangé est désigné sur la figure 4 par Ir.

Les signaux K.Id + Ip et Ir provenant respectivement des sommateurs 46 et 48 sont appliqués aux entrées d'un amplificateur différentiel intégrateur 49, délivrant un signal de commande Ic à sa sortie formant la sortie 37 du dispositif de protection 35. Le signal de commande Ic est adressé au moteur ou vérin 4, à travers le commutateur 12, alors dans sa seconde position. Le signal Ic commande le moteur ou vérin 4 jusqu'à ce que l'incidence I de l'aéronef atteigne une valeur telle que Ir soit devenue égale à K.Id + Ip.

Ainsi, lorsque Id est égale à IN, c'est-à-dire lorsque le pilote relâche le manche 2 qui prend automatiquement sa position neutrale, l'incidence I est commandée à la valeur de protection Ip. En revanche, lorsque le manche 2 est appliqué entre la butée à cabrer 2b, l'incidence I est commandée à la valeur IMR = KIdM + Ip.

Comme on peut le voir sur la figure 4, le signal V passe à travers un filtre passe-bas 50, destiné à éliminer les effets des rafales, et est amplifié dans un amplificateur 51. De même, le signal a est amplifié dans un amplificateur 52. Ces deux signaux amplifiés sont mélangés dans un sommateur algébrique 53, puis adressé à un limiteur 54 à deux seuils. Ce limiteur 54 est du type dans lequel le signal de sortie est :

- égal au signal d'entrée si celui-ci est compris entre les deux seuils ;
- égal au seuil inférieur, si le signal d'entrée est inférieur audit seuil inférieur ;
- égal au seuil supérieur, si le signal d'entrée est supérieur audit seuil supérieur.

Le signal de sortie du limitateur 54 est additionné au signal I (filtré par le filtre 47) dans le sommateur 48.

## Revendications

1 - Système électrique pour la commande d'une surface aérodynamique de profondeur (1) d'aéronef, du type comportant :
- un organe de commande (2) actionné par le pilote de l'aéronef et associé à un premier capteur de position (3) délivrant un signal électrique représentatif de la position dudit organe de commande donnant pour consigne l'incidence désirée (Id) pour l'aéronef ;
- des moyens moteurs (4) pour la commande de ladite surface aérodynamique de profondeur (1) ;
- un second capteur (6) associé à l'aéronef et délivrant un signal électrique représentatif de l'incidence réelle actuelle (I) de cet aéronef ; et
- des moyens de calcul (7) montés entre ledit premier capteur de position (3) et ledit moteur (4), recevant lesdits signaux délivrés par lesdits premier et second capteurs (3,6) et commandant ledit moteur (4) pour communiquer à ladite surface aérodynamique (1) un mouvement tel que l'aéronef atteigne une incidence suivant une loi de pilotage de profondeur programmée,
caractérisé en ce qu'il comporte :
- un dispositif (35) de protection d'incidence susceptible d'asservir l'incidence dudit aéronef dans une plage de valeurs limitée supérieurement par une valeur limite (IMR), au-delà de laquelle le vol dudit aéronef pourrait devenir dangereux ;
- des moyens de commutation commandés (11, 12) permettant de brancher entre ledit premier capteur de position (3) et lesdits moyens moteurs (4), soit lesdits moyens de calcul (7), soit ledit dispositif de protection (35) ; et
- des moyens logiques (24 à 34) de commande desdits moyens de commutation (11, 12) tels que :
. d'une part, à un instant donné, ledit dispositif de protection (35) est en circuit entre ledit premier capteur de position (3) et lesdits moyens moteurs (4), uniquement lorsque l'incidence réelle (I) de l'aéronef est, audit instant ou à l'instant immédiatement antérieur, supérieure à une valeur de seuil (Ip) inférieure à ladite valeur limite (IMR) et lorsque, simultanément, la position dudit organe de commande (2) se trouve dans le domaine des incidences à cabrer (Id-Ip > 0) ; et
. d'autre part, lesdits moyens de commutation (11, 12) prennent leur position pour laquelle lesdits moyens de calcul (7) sont en circuit entre ledit premier capteur de position (3) et lesdits moyens moteurs (4), dès que la position dudit organe de commande (2) se trouve dans le domaine des incidences à piquer (Id-Ip < 0).

2 - Système selon la revendication 1,
caractérisé en ce que lesdits moyens logiques de commande (24 à 34) comportent un premier comparateur (27) susceptibles de comparer le signal électrique représentatif de l'incidence réelle actuelle (I) de l'aéronef et un signal électrique représentatif de ladite valeur de seuil (Ip), un second comparateur (31) susceptible de comparer le signal électrique (Id) représentatif de la position dudit organe de commande et un signal électrique (IN) représentatif de la frontière entre les domaines des incidences à cabrer et à piquer, ainsi qu'un dispositif logique (24) recevant les signaux de sortie des deux comparateurs (27,31).

3 - Système selon la revendication 2,
caractérisé en ce que ledit dispositif logique (24) est un circuit séquentiel binaire comportant une entrée de commande, une entrée de remise à zéro prioritaire et une sortie unique, circuit dans lequel le signal de sortie n'est un 1 logique que lorsque le signal sur l'entrée de commande est un 1 et que simultanément le signal sur l'entrée de remise à zéro est 0 ou que, à partir de cet état, le signal sur l'entrée de commande passe de 1 à 0.

4 - Système selon la revendication 1,
caractérisé en ce que ladite plage de valeurs, auxquelles ledit dispositif de protection (35) asservit l'incidence de l'aéronef, a pour limite inférieure ladite valeur de seuil (Ip).

5 - Système selon la revendication 4,
caractérisé en ce que ledit dispositif de protection d'incidence (35) comporte un sommateur (46) pour additionner ledit signal représentatif de ladite valeur de seuil (Ip) au signal (Id) représentatif de la position dudit organe de commande (2) et des moyens (49) pour asservir ledit signal électrique représentatif de l'incidence réelle actuelle (I) à la somme de signaux ainsi obtenue.

6 - Système selon la revendication 5,
caractérisé en ce que, avant asservissement dudit signal électrique représentatif de l'incidence réelle actuelle (I) à ladite somme de signaux, ledit signal est corrigé pour prendre en compte des informations gyrométriques et anémométriques.

## Claims

1. Electric system for controlling an aircraft elevator aerodynamic surface (1) of the type including:
- a control device (2) activated by the pilot of the aircraft and connected to a first position sensor (3) delivering an electric signal representative of the position of said control device instructing the desired incidence (Id) required for the aircraft ;
- motor means (4) for controlling said elevator aerodynamic surface (1);
- a second sensor (6) connected to the aircraft and delivering an electric signal representative of the current actual incidence (I) of this aircraft and
- calculation means (7) mounted between said first position sensor (3) and said motor (4) receiving said signals delivered by said first and second sensors (3, 6) and controlling said motor (4) so as to communicate to said aerodynamic surface (1) such a movement that the aircraft reached an incidence according to a programmed elevator control law, characterized in that it includes:
- an incidence protection device (35) capable of controlling the incidence of said aircraft within a range of values limited upwards by a limit value (IMR), beyond which the flight of said aircraft could become dangerous;
– controlled switching means (11, 12) enabling to connect between said first position sensor (3) and said motors means (4) either said calculation means (7) or said protection device (35); and
– logic means (24 to 34) for controlling said switching means (11, 12), so that:
. on the one hand, at a given instant, said protection device (35) is switched on between said first position sensor (3) and said motor means (4) only when the actual incidence (I) of the aircraft is, at said instant or at an immediately prior instant, greater than a threshold value (Ip) lower than said limit value (IMR) and when, at the same time, the position of said control device (2) is within the range of incidences to be nosed up (Id – Ip > 0) and
. on the other hand, said switching means (11, 12) take their position for which said calculation means (7) are switched on between said first position sensor (3) and said motor means (4) as soon as the position of said control device (2) is within the range of incidences to be nosed down (Id –Ip < 0).

2. System according to claim 1, characterized in that said logic control means (24 to 34) include a first comparator (27) able to compare the electric signal representative of the current actual incidence (I) of the aircraft and an electric signal representative of said threshold value (Ip), a second comparator (31) able to compare the electric signal (Id) representative of the position of said control device and an electric signal (IN) representative of the boundary between the ranges of incidences to be nosed up and nosed down, together with a logic device (24) receiving the output signals of both comparators (27, 31).

3. System according to claim 2, characterized in that said logic device (24) is a binary sequential circuit including a control input, a priority reset input and a single output, in which circuit the output signal is only a logic 1 when the signal on the control input is a 1 and, at the same time, the signal on the reset input is 0 or, from this state, the signal on the control input passes from 1 to 0.

4. System according to claim 1, characterized in that said range of values for which said protection device (35) controls the incidence of the aircraft has, as a lower limit, said threshold value (Ip).

5. System according to claim 4, characterized in that said incidence protection device (35) includes a summing integrator (46) for adding said signal representative of said threshold value (Ip) to the signal (Id) representative of the position of said control device (2) and means (49) to control said electric signal representative of the current actual incidence (I) with the sum of signals thus obtained.

6. System according to claim 5, characterized in that, prior to controlling said electric signal representative of the current actual incidence (I) with said sum of signals, said signal is corrected so as to take into account gyrometric and anemometric informations.

**Patentansprüche**

1. Elektrisches System zum Steuern einer aerodynamischen Höhensteuerungsfläche (1) eines Luftfahrzeuges mit
– einem vom Piloten betätigten und mit einem ersten Positionssensor (3) verbundenen Steuerorgan (2), welches ein elektrisches Signal entsprechend der Position dieses Organs liefert, das einen Einstellwert für den gewünschten Anstellwinkel (Id) des Luftfahrzeuges abgibt;
– Motormitteln (4) zum Steuern der Höhensteuerungsfläche (1);
– einem zweiten mit dem Luftfahrzeug verbundenen Sensor (6), der ein elektrisches Signal entsprechend dem tatsächlichen Anstellwinkel des Luftfahrzeuges (I) liefert; und
– zwischen dem ersten Positionssensor (3) und dem Motor (4) angebrachten Rechenmitteln (7), die die vom ersten und zweiten Sensor (3, 6) gelieferten Signale empfangen und den Motor (4) derart steuern, daß der Höhensteuerungsfläche (1) eine Bewegung übertragen wird, so daß das Luftfahrzeug einen Anstellwinkel entsprechend einem einprogrammierten, Verlauf für die Höhensteuerung erreicht, gekennzeichnet durch:
– eine Schutzeinrichtung (35) für den Anstellwinkel, die die Regelung des Anstellwinkels des Luftfahrzeuges in einem nach oben durch einen Grenzwert (IMR) begrenzten, Wertebereich erlaubt, oberhalb dessen das Flugverhalten des Luftfahrzeuges gefährlich werden könnte;
– gesteuerte Umschaltmittel (11, 12), die den Anschluß entweder der Rechenmittel (7) oder der Schutzeinrichtung (35) zwischen dem ersten Positionssensor (3) und den Motormitteln (4) erlauben; und durch
– Logik-Steuermittel (24 bis 34) für die Umschaltmittel (11, 12), so daß:
. einerseits zu einem gegebenen Zeitpunkt die Schutzeinrichtung (35) nur dann zwischen dem ersten Positionssensor (3) und den Motormitteln (4) angeschlossen ist, wenn der tatsächliche Anstellwinkel (I) des Luftfahrzeuges zum gegebenen Zeitpunkt oder direkt davor größer als ein Schnellwert (Ip) ist, der kleiner als der Grenzwert (IMR) ist, und wenn gleichzeitig die Position des Steuerorgans (2) sich im Bereich der Anstiegs-Anstellwinkel befindet (Id – Ip > 0); und daß
. andererseits die Umschaltmittel (11, 12) ihre Position, in der die Rechenmittel (7) zwischen dem ersten Positionssender (3) und den Motormitteln (4) angeschlossen sind, einnehmen, sobald die Position des Steuerorgans (2) sich im Bereich der Absink-Anstellwinkel befindet (Id – Ip < 0).

2. System nach Anspruch 1, dadurch gekennzeichnet, daß die Logik-Steuermittel (24 bis 34) einen ersten Vergleicher (27), der den Vergleich des elektrischen Signals entsprechend dem tatsächlichen Anstellwinkel (I) des Luftfahrzeugs mit dem elektrischen Signal entsprechend dem Schwellwert (Ip) erlaubt, einen zweiten Vergleicher (31), der den Vergleich des elektrischen Signals entsprechend der Position des Steuerorgans (Id) mit dem elektrischen Signal entsprechend der Grenze zwischen den Bereichen der Anstiegs- und Absink-Anstellwinkel (IN) erlaubt, sowie eine die Ausgangssignale der beiden Vergleicher (27, 31) empfangende Logikstufe (24) aufweisen.

3. System nach Anspruch 2, dadurch gekennzeichnet, daß die Logikstufe (24) ein sequentieller binärer Schaltkreis ist, der einen Steuereingang, einen vorrangigen Rücksetzeingang auf Null und einen einzigen Ausgang aufweist, wobei in diesem Schaltkreis das Ausgangssignal nur dann logisch 1 ist, wenn das Signal am Steuereingang logisch 1 und gleichzeitig das Signal am Rücksetzeingang auf Null logisch 0 ist oder von diesem Zustand an das Signal am Steuereingang von logisch 1 auf 0 wechselt.

4. System nach Anspruch 2, dadurch gekennzeichnet, daß der Wertbereich, gemäß dem die Schutzeinrichtung (35) den Anstellwinkel des Luftfahrzeugs regelt, als unteren Wert den Schwellwert (Ip) hat.

5. System nach Anspruch 2, dadurch gekennzeichnet, daß die Schutzeinrichtung (35) ein Summierglied (46) zum Addieren des Signals entsprechend dem Schwellwert (Ip) zum Signal (Id) entsprechend der Position des Steuerorgans (2) und Mittel (49) zum Regeln des elektrischen Signals entsprechend dem tatsächlichen Anstellwinkel (I) gemäß der Summe der derart erhaltenen Signale aufweist.

6. System nach Anspruch 2, dadurch gekennzeichnet, daß vor Regelung des elektrischen Signals entsprechend dem tatsächlichen Anstellwinkel (I) gemäß der Summe der Signale dieses Signal zwecks Berücksichtigung gyrometrischer und anemometrischer Informationen korrigiert wird.

## Fig.1

## Fig.3

Fig: 2

MOYEN DE CALCUL

DISPOSITIF DE PROTECTION

MOTEUR

LOGIQUE DE COMMANDE

GENERATEUR SIGNAL

GENERATEUR SIGNAL

EP 0 261 015 B1

EP 0 261 015 B1

*Fig. 4*